(19) Europäisches Patentamt

European Patent Office

Office européen des brevets

(11) **EP 4 628 834 A1**

(12) **EUROPEAN PATENT APPLICATION**

(43) Date of publication:
**08.10.2025 Bulletin 2025/41**

(21) Application number: **24305525.8**

(22) Date of filing: **04.04.2024**

(51) International Patent Classification (IPC):
*G01B 7/02* (2006.01)   *G01B 7/06* (2006.01)

(52) Cooperative Patent Classification (CPC):
**G01B 7/023; G01B 7/10**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Ratier-Figeac SAS**
**46101 Figeac Cedex (FR)**

(72) Inventor: **AUBARET, Yohann**
**Capdenac (FR)**

(74) Representative: **Dehns**
**10 Old Bailey**
**London EC4M 7NG (GB)**

(54) **ELECTROMAGNETIC DISTANCE-SENSING SYSTEM**

(57)   An electromagnetic sensor system and a method for sensing distance to a conductive target (1230) are disclosed. The sensor system has filtering circuity (1252), a first sensor (1120) having a first electromagnetic sensor coil (1210) driven with a first alternating current at a first predetermined frequency, and a second sensor (1122) having a second electromagnetic sensor coil driven with a second alternating current at a second predetermined frequency. The second predetermined frequency is offset from the first predetermined frequency by an offset amount. The first sensor (1120) outputs a first signal having a component that is that is indicative of a distance from the first electromagnetic sensor coil (1210) to the conductive target (1230), and the filtering circuitry (1252) applies a low-pass filter to the first signal. The low-pass filter (1252) has a cut-off frequency that is below the offset amount such that a component of the first signal caused by mutual inductance between the first and second electromagnetic sensor coils is attenuated. The filtering circuitry outputs a first filtered signal indicative of the distance from the first electromagnetic sensor coil (1210) to the conductive target (1230).

FIG. 2

**Description**

TECHNICAL FIELD

This disclosure relates to electromagnetic distance sensors, including, but not limited to, eddy-current sensors.

BACKGROUND

Electromagnetic sensors can be used for variety of contactless sensing applications including proximity sensing of conductive materials. Some sensors can be used to output a quantitative measure of distance, rather than just binary proximity sensing.

It can be desirable to place multiple electromagnetic sensor coils close to one another to form a multi-sensor distance-sensing system. This may allow a sensing system to gather more information about the location of a conductive target and increase system reliability. However, where multiple electromagnetic sensor coils are in close proximity to one another, mutual inductance between the respective sensors can cause interference that can impair the performance of the distance sensing.

A multi-sensor electromagnetic sensor system is desired that is robust against such interference.

SUMMARY OF THE DISCLOSURE

From a first aspect, the disclosure provides an electromagnetic sensor system for sensing distance to a conductive target, the sensor system comprising:

a first sensor comprising:

a first electromagnetic sensor coil;
first drive circuitry for driving the first electromagnetic sensor coil with a first alternating current at a first predetermined frequency; and
first sensing circuitry, electrically coupled to the first electromagnetic sensor coil, and configured to output a first signal having a component that is indicative of a distance from the first electromagnetic sensor coil
to the conductive target;

a second sensor comprising:

a second electromagnetic sensor coil; and
second drive circuitry for driving the second electromagnetic sensor coil with a second alternating current at a second predetermined frequency, wherein the second predetermined frequency is offset from the first predetermined frequency by an offset amount, and

filtering circuitry configured to apply a low-pass filter to the first signal, wherein the low-pass filter has a cut-off frequency that is below the offset amount such that a component of the first signal caused by mutual inductance between the first and second electromagnetic sensor coils is attenuated, and to output a first filtered signal indicative of the distance from the first electromagnetic sensor coil to the conductive target.

From a second aspect, the disclosure provides a method for sensing distance to a conductive target using an electromagnetic sensor system, the sensor system comprising:

a first sensor comprising a first electromagnetic sensor coil; and
a second sensor comprising a second electromagnetic sensor coil,

the method comprising:

driving the first electromagnetic sensor coil with a first alternating current at a first predetermined frequency;
driving the second electromagnetic sensor coil with a second alternating current at a second predetermined frequency, wherein the second predetermined frequency is offset from the first predetermined frequency by an offset amount;
outputting a first signal having a component that is indicative of a distance from the first electromagnetic sensor coil to the conductive target;
applying a low-pass filter to the first signal, wherein the low-pass filter has a cut-off frequency that is below the offset amount such that a component of the first signal caused by mutual inductance between the first and second electromagnetic sensor coils is attenuated; and
outputting a first filtered signal indicative of the distance from first electromagnetic sensor coil to the conductive target.

When the electromagnetic sensor coils are arranged close enough together, the magnetic field generated by each sensor coil has an inductive effect on the other electromagnetic sensor coil. Thus, for the first electromagnetic sensor, interference in the output of the first sensing circuitry may occur as a result of mutual inductance between the first and second electromagnetic sensor coils. In examples in which the second sensor also has sensing circuitry, interference may also be present in its output.

The effect of this interference in the output may be periodic, having a frequency equal to the difference between the driving frequency of the first electromagnetic sensor coil and the driving frequency of the second electromagnetic sensor coil. Thus it will be seen that, by driving the first electromagnetic sensor coil at a first predetermined frequency which is offset by a predetermined offset amount from the second predetermined frequency (i.e. higher than the second predetermined frequency by the predetermined offset amount or lower than the second predetermined frequency by the predetermined offset amount, the offset amount therefore being an absolute value of the offset), the low-pass filter may be designed to attenuate frequencies in the first signal that are equal to and greater than the offset amount, and so mitigate the effect of interference resulting from mutual inductance between the two electromagnetic coils. The stability and/or accuracy of the signal indicative of the distance from the first electromagnetic sensor coil to the conductive target may therefore be improved.

In some examples the first sensor is an inductive sensor, e.g. an eddy-current sensor. The first electromagnetic sensor coil may comprise a ferromagnetic core, but in some examples does not comprise a ferromagnetic core - e.g. the first electromagnetic sensor coil may comprise an air core. Not using a ferromagnetic core may reduce magnetic losses and thermal nonlinearities in the sensor output. This may improve the responsiveness of the sensor output to changes in distance to the conductive target. However, using a ferromagnetic core may focus the magnetic field produced by the first electromagnetic sensor coil, and thus allow the first sensor to detect the conductive target from further away. The first electromagnetic sensor coil may comprise one or more turns of conductive wire. Increasing the number of turns of conductive wire may increase the strength of the magnetic field produced by the first electromagnetic sensor coil. A stronger magnetic field may increase the sensing range of the first sensor. On the other hand, decreasing the number of turns of conductive wire may increase the weight of the electromagnetic sensor system. Weight may be a relevant design consideration in, for example, aircraft systems.

The component of the first signal indicative of distance may be a low-frequency component. It may be a constant or slowly changing DC component. It may have a maximum frequency that is less than the offset amount, e.g. less than a half or a tenth of the offset amount. It may have a maximum frequency that is less than the first predetermined frequency and less than the second predetermined frequency. In some examples the component of the first signal may be representative of an impedance of the first electromagnetic sensor coil. The impedance of the first electromagnetic sensor coil may vary depending on a distance (e.g. an air gap) between the conductive target and the first electromagnetic sensor coil - e.g. the impedance of the first electromagnetic sensor coil may decrease as the distance decreases.

In some examples, the first sensor (e.g. the first sensing circuitry) may comprise a Wheatstone bridge. The first electromagnetic sensor coil may form at least part of one branch of the Wheatstone bridge. A further branch of the Wheatstone bridge may comprise a reference coil. The Wheatstone bridge may be configured to produce a differential signal representative of the impedance of the first electromagnetic sensor coil. The differential signal may be a differential current, but in some examples is a differential voltage.

In some examples, the first sensor (e.g. the first sensing circuitry) comprises first conditioning circuitry which is configured to receive the differential signal from the Wheatstone bridge, and output a single-ended output signal. The single-ended output signal may, in some examples, be a time-averaged (e.g. mean) value. The first conditioning circuitry may comprise analogue and/or digital circuitry for performing any one or more of: amplification, impedance adaptation, rectification, differential-to-single-ended conversion, or time averaging. The first conditioning circuitry may be arranged to output the first signal to the filtering circuitry.

In some examples, the offset amount is equal to or greater than 1 kHz, e.g. equal to or greater than 10kHz. This should be understood to mean that the second predetermined frequency used to drive the second electromagnetic sensor coil is at least 1 kHz higher than or at least 1 kHz lower than the first predetermined frequency used to drive the first electromagnetic sensor coil. In a further example, the second predetermined frequency used to drive the second electromagnetic sensor coil is at least 10kHz higher than or at least 10kHz lower than the first predetermined frequency used to drive the first electromagnetic sensor coil. A greater offset amount may allow the cut-off frequency of the low-pass filter to be increased. Maximising the offset amount within the constraints of the electromagnetic sensor system (e.g. subject to maximum and/or minimum frequencies supported by the drive circuitry) may increase the range of frequencies which are passed through by the low-pass filter - i.e. the bandwidth of the output signal provided by the electromagnetic sensor system may be increased. An output signal with greater bandwidth may allow the system to be more responsive to changes in the distance to the conductive target over time.

The cut-off frequency may be the -3dB frequency of the low-pass filter. The low-pass filter may be configured to attenuate the mutual-inductance component by at least 3dB or at least 6dB or at least 50dB. In some examples, the cut-off frequency of the low-pass filter is one-tenth, or one-hundredth, of the offset amount or lower. Implementing a cut-off frequency which is at most one-tenth of the offset amount may result in the signal component of the output of the first sensor at a frequency corresponding to the offset amount being attenuated further, e.g. by at least 50dB. The low-pass filtering circuitry may comprise any circuitry suitable for implementing a low-pass filter - e.g. analogue circuitry and/or digital circuitry. The low-pass filter may be a digital or analogue filter. It may comprise active circuitry or fast-Fourier-transform (FFT) circuitry.

The filtered signal may decrease with increasing distance between the first electromagnetic sensor coil and the conductive target. It may decrease linearly in some examples, although this is not essential. It may be an analogue signal—e.g. a voltage signal. The electromagnetic sensor system may comprise an analogue to digital converter (ADC). It may be arranged to output the first filtered signal as a first digital signal. It may comprise a processing system (e.g. comprising an ASIC, or a DSP, or a microcontroller) configured to process the first digital signal. A predetermined relationship between the output of the first sensor and the distance between the conductive target and the first sensor may be stored in a memory of the electromagnetic sensor system, e.g. as a look-up table in a database or as a mathematical relationship, and the predetermined relationship may be used by a processing system (in hardware or by software) to calculate a calibrated distance between the conductive target and the first electromagnetic sensor coil (e.g. in millimetres). The sensor system may generate a time series of digital distance values.

In other, potentially overlapping examples, the signal indicative of the distance to the conductive target may be used to determine a binary state - e.g. whether or not the conductive target is present within a sensing range of the first electromagnetic sensor coil, and/or whether or not the conductive target is closer than a predetermined threshold value to the first electromagnetic sensor coil. In such examples, the signal indicative of the distance to the conductive target may be input to a comparator, and the output from the comparator may indicate whether the conductive target is closer to the first electromagnetic sensor than a threshold value. Thus, it can be seen that the electromagnetic sensor system may provide a proximity detection system and/or a distance measurement system.

In some examples, each of the first sensor and the second sensor may be configured to sense a respective distance to the same conductive target. The conductive target may, in some examples, be a component of the electromagnetic sensor system. In some examples, the first sensor coil and the second sensor coil may be arranged or mounted such that a coil axis of the first sensor is parallel to a coil axis of the second sensor. The coils may be arranged or mounted in a same plane. They may be separated by less than a hundred, or ten, or five times the diameter of the first coil.

In some examples the second sensor is an inductive sensor, e.g. an eddy-current sensor. The second sensor may comprise second sensing circuitry, electrically coupled to the second electromagnetic sensor coil, and configured to output a second signal having a component that is indicative of a distance from the second electromagnetic sensor coil to the, or a further, conductive target. The filtering circuitry may be further configured to apply a low-pass filter to the second signal, wherein the low-pass filter has a cut-off frequency that is below the offset amount such that a component of the second signal caused by mutual inductance between the first and second electromagnetic sensor coils is attenuated, and to output a second filtered signal indicative of the distance from the second electromagnetic sensor coil to the conductive target. The same low-pass filter, or a further identical low-pass filter, may be applied to the second signal as to the first signal. The second sensing circuitry may comprise second conditioning circuitry that may be identical to, or shared with, or may have features in common with, the first conditioning circuitry. The second sensor may have any of the features of the first sensor as disclosed herein. The sensor system may be configured to output the second filtered signal as a digital signal.

Using a plurality of sensors to sense distance to the same conductive target allows two independent signals indicative of distance to the conductive target to be generated. This may improve the reliability of the sensing system. Some examples where a respective distance from each electromagnetic sensor coil to the conductive target is determined may be further configured to determine (e.g. calculate) a mean distance value from these two distances. In other examples where the signal indicative of the distance to the conductive target is used to indicate a binary state - e.g. the conductive target being present or not present, one output signal may be used to corroborate the output signal of the other. In this example, a resulting output signal indicating the presence of the conductive target may only be set to a positive indication if both intermediate output signals indicate that the conductive target is present. Furthermore, having at least two different sensors in the electromagnetic sensor system may add redundancy to the system, and thus improve its safety and reliability.

In some examples the electromagnetic sensor system comprises more than two sensors, each sensor comprising a respective electromagnetic sensor coil and drive circuitry for driving said electromagnetic sensor coil at a respective predetermined frequency. The filtering circuitry may, in said examples, be configured to apply a low-pass filter to a respective signal output by at least one of the plurality of sensors, wherein the low-pass filter has a cut-off frequency that is below a minimum offset amount such that a component of the signal caused by mutual inductance between any of the electromagnetic sensor coils is attenuated. The minimum offset amount may correspond to (e.g. equal) the smallest offset amount between any two of the predetermined frequencies at which the respective electromagnetic sensor coils in the electromagnetic sensor system are driven. As such, the low-pass filter is designed to attenuate signal components at each of the frequencies corresponding to the respective predetermined offset amounts between any combination of predetermined driving frequencies used in the electromagnetic sensor system.

Any features of the first sensor described in the examples herein may be applicable to any further sensors in the electromagnetic sensor system.

In some examples, the electromagnetic sensor system may be used as part of a sensor apparatus of a propeller blade angle detection system. In the propeller blade angle detection system, the conductive target may be elongate and integral with, or configured for coupling to, a component of a variable pitch propeller assembly so as to rotate coaxially with the propeller about an axis of rotation of the propeller, and to translate axially with varying pitch angle of one or more blades of the propeller. The conductive target may comprise an outer surface that is a surface of revolution about the axis of rotation, and that has a diameter that changes monotonically with distance along the axis of rotation. Each of the first sensor and the second sensor may be configured for non-rotational and non-translating mounting adjacent the conductive target, and each of the first sensor and the second sensor may be configured to output a respective signal measuring a respective distance between the outer surface of the conductive target and the respective electromagnetic sensor coil. The sensor apparatus may be configured to output a signal in dependence on either or both of the measured distances, wherein the output signal is indicative of the pitch angle of the one or more blades of the propeller.

Features of any example described herein may, wherever appropriate, be applied to any other example described herein. Where reference is made to different examples or sets of examples, it should be understood that these are not necessarily distinct but may overlap.

BRIEF DESCRIPTION OF THE DRAWINGS

Certain examples of the disclosure will now be described, by way of example only, with reference to the accompanying drawings, in which:

Figure 1 is a schematic diagram showing a sensor array comprising two electromagnetic sensors;
Figure 2 is a schematic diagram showing exemplary circuitry for implementing an eddy-current distance sensor;
Figure 3 is a schematic diagram showing an exemplary implementation of the conditioning circuitry of the eddy-current distance sensor;
Figure 4 is a plot showing the exemplary form of an output signal from the eddy-current distance sensor;
Figure 5 is a plot showing an example of a low-pass filter used to attenuate the sinusoidal variation in the output signal of the eddy-current sensor 1120 in accordance with examples of the disclosure;
Figure 6 is a plot showing an output signal from the low-pass filter when it is applied to the output signal of the eddy-current sensor 1120;
Figure 7 is a schematic diagram of a propeller assembly with a blade pitch angle sensing system, in which the sensors described with reference to Figures 1-5 can be used;
Figure 8 is a schematic diagram showing a cross-sectional view of the arrangement of the sensor apparatus shown in Figure 7 relative to a portion of the transfer tube, when the transfer tube is in a first displacement position along the rotational axis A;
Figure 9 is a schematic diagram showing a cross-sectional view of the arrangement of the sensor apparatus shown in Figure 7 relative to a portion of the transfer tube, when the transfer tube is in a second displacement position along the rotational axis A;
Figure 10 is a schematic diagram showing a first exemplary ring-shaped sensor; and
Figure 11 is a schematic diagram showing a second exemplary ring-shaped sensor.

DETAILED DESCRIPTION

Electromagnetic sensors can be used for variety of contactless sensing applications including fault detection in conductive materials, as well as qualitative (e.g. binary) proximity or quantitative distance sensing of conductive materials. An eddy-current sensor comprises an electromagnetic sensor coil which is driven by an oscillator. Driving the sensor coil with an alternating current produces a time-varying magnetic field. When a conductive target passes through this magnetic field, according to Faraday's law of induction, the magnetic field induces alternating electric currents in the surface of the conductive target. These induced surface currents are known as eddy currents. The eddy currents self-produce another magnetic field, which affects the impedance of the sensor coil. The change in impedance of the sensor coil due to the eddy currents in the conductive target is directly linked to the distance (e.g. air gap) between the sensor coil and the conductive target. Thus, the distance can be obtained by measuring the equivalent impedance. This allows eddy-current sensors to function as distance and proximity sensors. Having an array of sensors can allow more information regarding the proximity of different parts of the conductive target to be obtained—e.g. for improved measurement accuracy, or for determining additional information about the position or orientation of the conductive target.

Where multiple electromagnetic sensors are mounted in close proximity to one another, mutual inductance between the sensor coils in the respective sensors has an effect on the impedance of each sensor coil. If the driving frequencies of the different electromagnetic sensors are not the same, the mutual inductance generated in a first sensor coil due to the effects from a proximate second sensor coil varies periodically over time. This phenomenon is known as cross-talk between sensors, and can affect the accuracy of the sensor outputs. Examples of the present disclosure seek to address this issue.

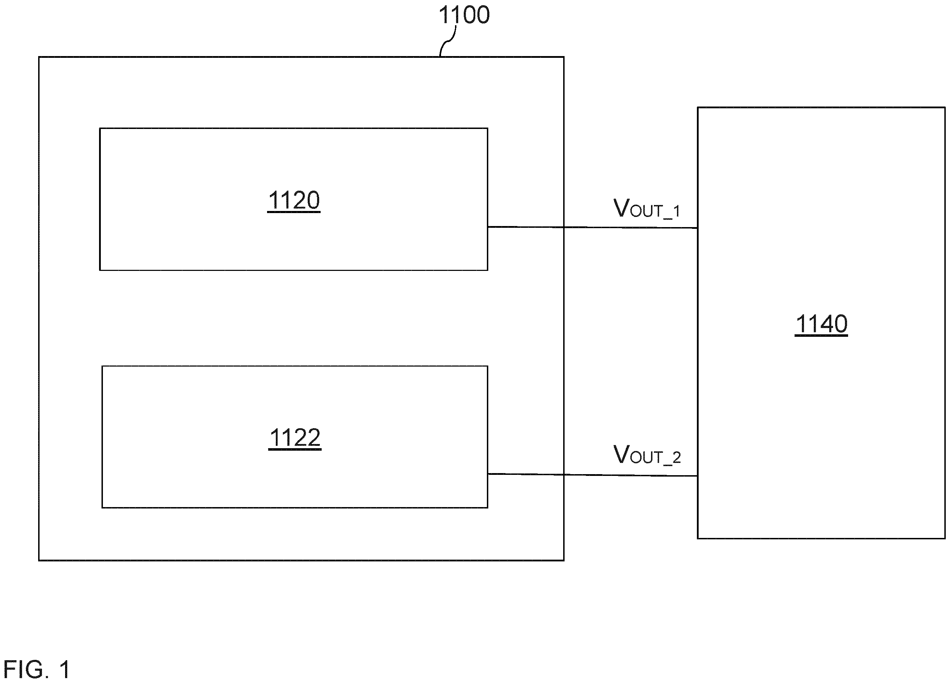

Figure 1 is a schematic diagram showing a sensor array 1100 comprising two electromagnetic sensors 1120, 1122. In the example described herein each of the sensors 1120, 1122 is an eddy-current proximity sensor, although in other examples the electromagnetic sensors 1120, 1122 could be two different types of inductive (i.e. coil-based) sensor. Whilst there are two electromagnetic sensors shown in Figure 1, the present disclosure may be applicable to arrays comprising more than two electromagnetic proximity sensors-e.g. arranged in a line or as a rectangular array. The coils of the sensors 1120, 1122 may have parallel axes and may lie in a common plane, although this is not essential.

As shown in Figure 1, the first sensor 1120 is arranged to output a first analogue output signal $V_{OUT\_1}$ to a processing system 1140 (e.g. comprising a microcontroller with a memory storing software for performing operations as described herein). The second sensor 1122 is arranged to output a second analogue output voltage $V_{OUT\_2}$ to the processing system 1140. The processing system 1140 may be configured to process the output signals from the first sensor 1120 and second sensor 1122 and output information regarding the distance between a conductive target and the sensor array 1100. Whilst the processing system 1140 in Figure 1 is schematically shown as one block, receiving both output signals $V_{OUT\_1}$ and $V_{OUT\_2}$, it should be understood that processing system 1140 may encompass multiple analogue and/or digital circuit components which may be electrically and/or physically separate to one another. Each of the sensors 1120, 1122 may contain or be coupled to a different respective oscillator. Driving each sensor using a separate alternating supply, rather than a single common supply, can add redundancy to the system and allow the system 1100 still to sense distance even if one of the oscillators fails. This may be important in safety-critical systems, where the failure of one component should not result in the failure of the whole system. This may apply to aircraft systems, for example.

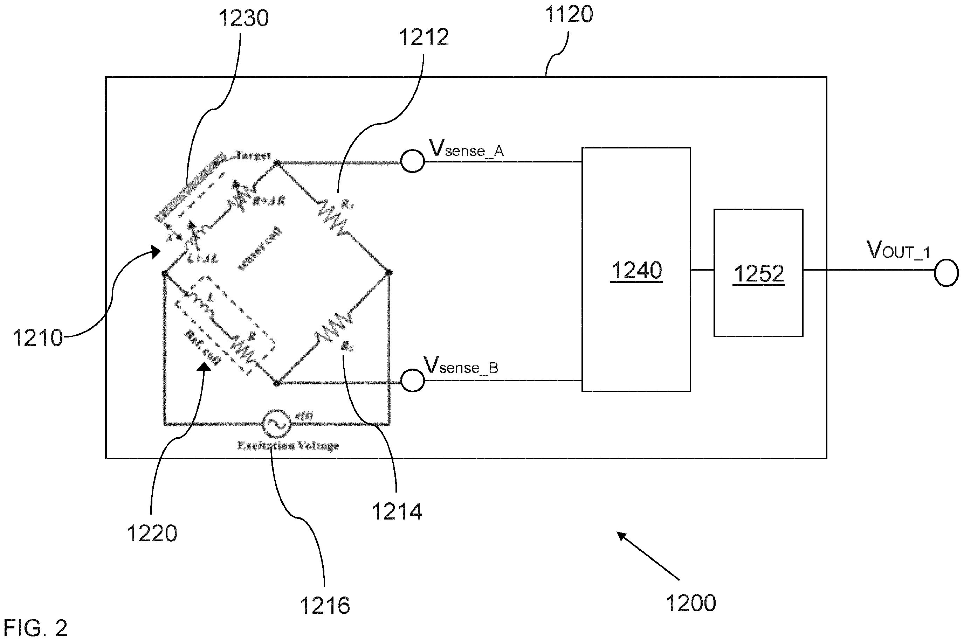

Figure 2 is a schematic diagram showing exemplary circuitry 1200 for implementing an eddy-current proximity sensor as implemented in each of the first sensor 1120 and the second sensor 1122 shown in Figure 1. The circuitry 1200 comprises a Wheatstone bridge having a sensor coil 1210 on a first branch, a reference coil 1220 on a second branch, a first balancing resistors Rs 1212 on a third branch, and a second balancing resistor Rs 1214 on a fourth branch. An oscillator 1216 provides an excitation voltage across the Wheatstone bridge to energise the sensor coil 1210. A conductive target 1230 is shown in close proximity to the sensor coil 1210. As explained above, the impedance of the sensor coil 1210 will change depending on the proximity of a conductive target 1230 to the sensor coil 1210. The sensor coil 1210 is therefore modelled as a variable inductor and variable resistor. The reference coil 1220 is modelled as an inductor with fixed inductance and a resistor with fixed resistance. A first sensing voltage $V_{sense\_A}$, and a second sensing voltage $V_{sense\_B}$ are output from the Wheatstone bridge to conditioning circuitry 1240. The analogue conditioning circuitry 1240 is followed by filtering circuitry 1252 which together use the change in the sensing voltages to determine a sensor output signal $V_{OUT\_1}$ having a steady voltage level that is indicative of a distance from the respective sensor coil to the conductive target 1230.

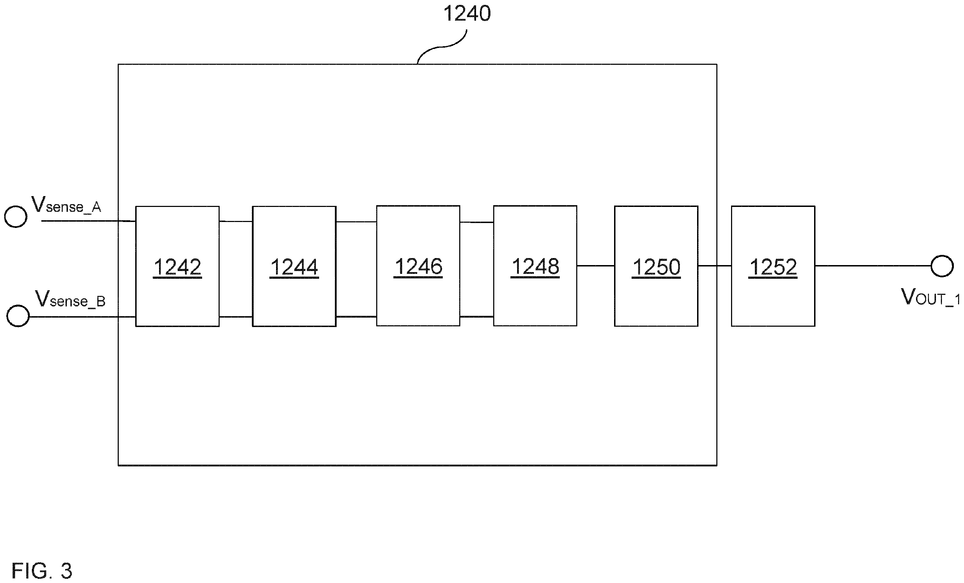

Figure 3 is a schematic diagram showing an exemplary implementation of the conditioning circuitry 1240 shown in Figure 2. The conditioning circuitry 1240 receives the first sensing voltage $V_{sense\_A}$ and a second sensing voltage $V_{sense\_B}$ from the Wheatstone bridge shown in Figure 2. This differential signal is passed through, in order: a first impedance adaptation and gain stage 1242; a full wave rectifier 1244; a second impedance adaptation and gain stage 1246; and a differential-to-single-ended conversion stage 1248, which is configured to output a single-ended voltage signal representative of the proximity of the conductive target 1230 to the sensor coil 1210. This single-ended signal is input to a mean value extraction stage 1250. Extracting a mean value 1250 may improve the stability of the signal which is output from the conditioning circuitry 1240. The output of the mean value extraction stage 1250 is then passed to filtering circuitry 1252, which is arranged to apply a low-pass filter as described herein. Each of these different stages of circuitry could be implemented in a number of different ways, and some examples may omit one or more of them, or include additional stages, or perform these operations in a different order. For example, the low-pass filter 1252 here receives a single-ended input but could, in some examples, receive and filter a differential signal.

For each sensor 1120, 1122, any of all of the components and connections that form the Wheatstone bridge, apart from the sensor coil 1210 itself, as well as any or all of the components of the conditioning circuitry 1240, may collectively implement the "sensing circuitry" as disclosed herein.

The outputs $V_{OUT\_1}$, $V_{OUT\_2}$ from the two sensors 1120, 1122 may be further processed by the processing system 1140 shown in Figure 1. This system 1140 may comprise components for performing analogue signal processing and/or digital signal processing. It may include one or more analogue or digital displays for displaying information to a user. The processing system 1140 may include one or more analogue to digital converters (ADCs) for sampling the voltages $V_{OUT}$, e.g. comprising each being compared against a voltage threshold by an analogue or digital comparator, or comprising each being converted into a digital value representative of a respective distance to the conductive target 1230 for further digital processing and/or display to a user.

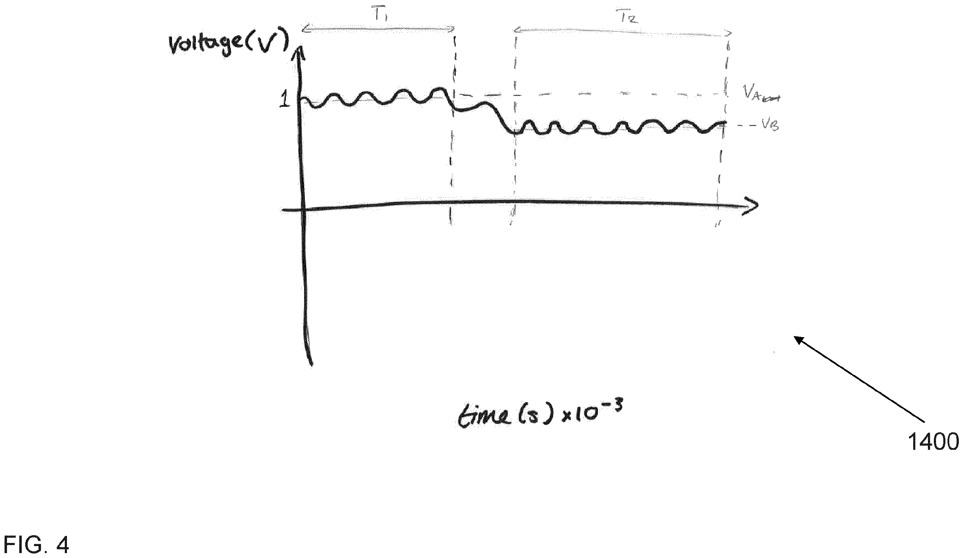

Figure 4 is a plot 1400 showing the form of an exemplary output signal $V_{OUT\_1}$ from the conditioning circuitry 1240 of the eddy-current proximity sensor 1120 shown in Figures 1 and 2 in one example use case, before the output signal is input to the filtering circuitry 1252. The plot 1400 shows the output signal $V_{OUT\_1}$ from the conditioning circuitry 1240 over a first period of time T1 in which the conductive target 1230 is located at a first distance from the sensor coil 1210, and a later, second period of time T2, in which the conductive target 1230 is located at a second distance from the sensor coil 1210.

During the first period of time T1 the output signal $V_{OUT\_1}$ takes the approximate form of:

$$V_{OUT\_1} \approx V_A + B \sin \theta t$$

During the second period of time T2 the output signal $V_{OUT\_1}$ takes the approximate form of:

$$V_{OUT\_1} \approx V_B + B \sin \theta t$$

The sinusoidal component in the output signal $V_{OUT\_1}$ is caused by cross-talk interference from the second sensor 1122. The frequency of this sinusoidal variation $\theta$ can be calculated as being equal to the difference between the driving frequency $\omega_1$ of the first coil 1120, and the driving frequency $\omega_2$ of the second coil 1122 - i.e. $\theta = |\omega_1 - \omega_2|$, where the first sensor input signal is modelled as $V_{IN\_1} = A \sin \omega_1 t$, and the second sensor input signal is modelled as $V_{IN\_2} = B \sin \omega_2 t$.

A constant or slowly-changing DC (i.e. low-frequency) component in the output signal $V_{OUT\_1}$ varies with the separation distance between the first sensor coil 1210 and the conductive target 1230. Thus, the signal component $V_A$ is representative of the separation distance during the first time period T1, and the signal component $V_B$ is representative of the separation distance during the second time period T2. The relationship between the output signal $V_{OUT\_1}$ and the separation distance may vary in dependence on the shape of the conductive target 1230.

In the example shown in the plot 1400, there is a significant difference between the driving frequency of the first sensor 1120 and the second sensor 1122. The absolute value of $\omega_1 - \omega_2$ - i.e. the offset amount referred to above, can be chosen for a given application based on a required sensitivity in the measurement of distance to the target 1230 over time. The frequency of the sinusoidal variation ($\theta = |\omega_1 - \omega_2|$) may be chosen to be high compared to the maximum expected variation in the output signal due to a change in separation between the sensor coil and the conductive target.

Purposefully selecting the driving frequency of the first coil and the driving frequency of the second coil so that they are substantially different to one another enables the relatively low-frequency component of the sensing signal which is of interest to be isolated using a low-pass filter. The relatively high frequency of the sinusoidal variation in the output signal is filtered out by a low-pass filter, where the low-pass filter is designed to attenuate the frequency of the sinusoidal variation caused by the expected interference effect. The greater the difference between the driving frequency of the first coil and the driving frequency of the second coil, the more bandwidth is available for the remaining sensing signal produced by the sensor system after the output signal of the conditioning circuitry 1240 is passed through the low-pass filter in the filtering circuitry 1252. A greater bandwidth remaining in the output signal may allow the system to be more responsive to changes in the proximity of the conductive target 1230 to the sensor coil 1210.

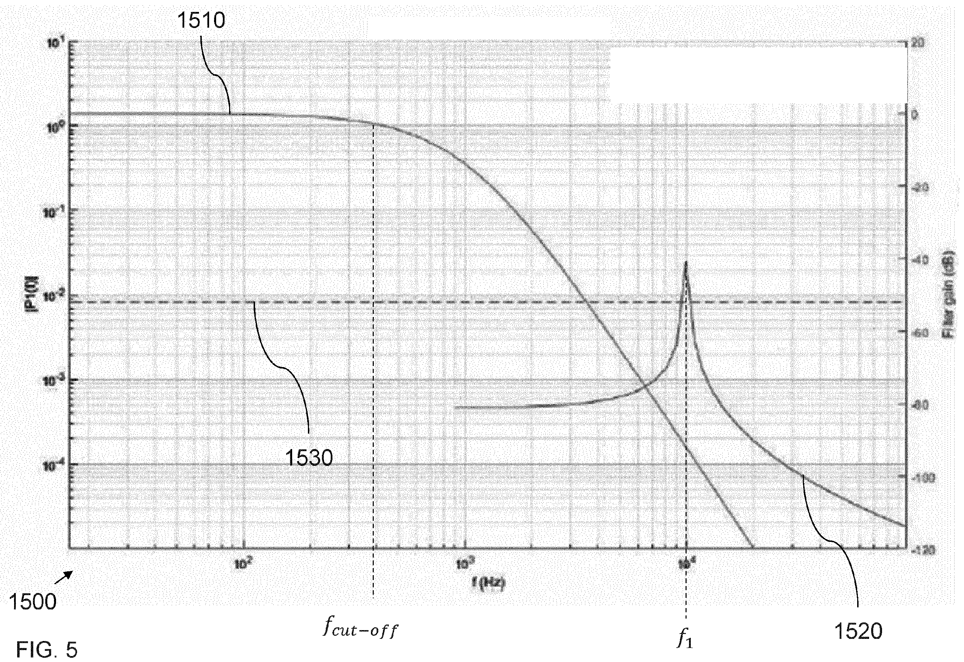

Figure 5 is a plot showing an example action of a low-pass filter that may be used to attenuate the sinusoidal variation in the output signal $V_{OUT\_1}$ of the first sensor 1120 in some examples. A second similar or identical low-pass filter may be used to filter the output signal $V_{OUT\_2}$ of the second sensor.

The plot shown in Figure 5 shows, on the right side vertical axis, the gain 1510 of the low-pass filter in decibels (dB) as it varies with frequency. It also shows, on the left side vertical axis, the output frequency spectrum 1520 of the first sensor output signal $V_{OUT\_1}$. The output frequency spectrum 1520 peaks at frequency $f_1$ (1100 kHz in this example), where $f_1 = \dfrac{\theta}{2\pi}$. As can be seen in Figure 5, the attenuation of the low-pass filer 1510 is around -92 dB at this peak, $f_1$, in the output frequency spectrum 1520. The low-pass filter 1510 may be designed such that the -cut-off frequency $f_{cut\text{-}off}$ (1 kHz in this example) is approximately a factor of ten less than the peak frequency of the output frequency spectrum 1520. The horizontal line 1530 represents an attenuation objective with a crosstalk error of less than 0.1% full scale.

In examples where eddy-current proximity sensors are used in control systems which need to be highly responsive, a corresponding minimum bandwidth may be required to remain in the sensing system. For example, a minimum of 1100Hz of bandwidth may be required to remain in the output signal from the conditioning circuitry 1240. The difference between the driving frequency of the first sensor and the second sensor may therefore be set to be approximately 1kHz or greater, such that the low-pass filtering circuitry 1252 does not substantially attenuate frequencies at 1100Hz or less.

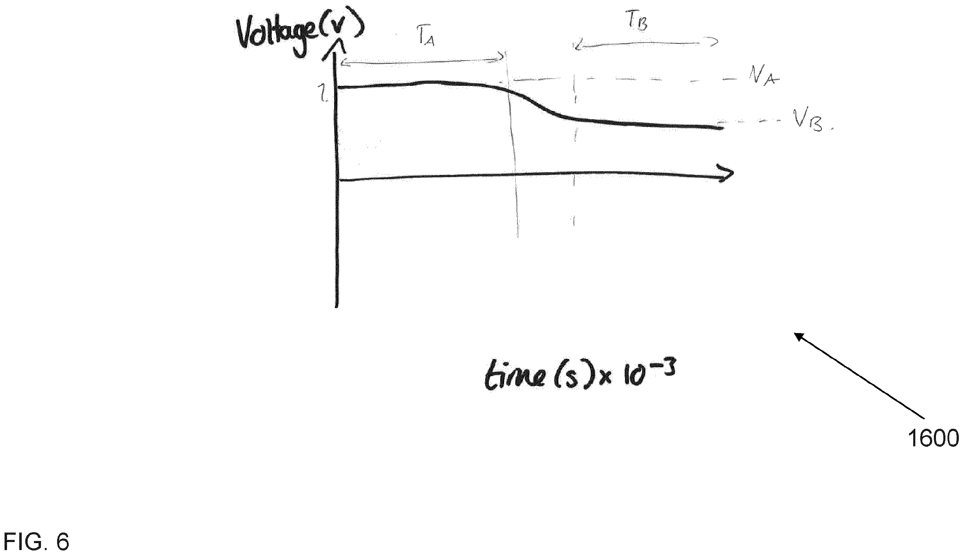

Figure 6 is a plot 1600 showing an exemplary output signal from the low-pass filter 1510 shown in Figure 5 when it is applied to the output signal $V_{OUT\_1}$ of the eddy-current sensor 1120 shown in Figures 1 and 2. As can be seen, the variation in the low-frequency (i.e. slowly varying DC) component of the output signal $V_{OUT\_1}$ (e.g. $V_A$ and $V_B$), which could be seen in Figure 5, remains, but the high-frequency sinusoidal variation due to cross-talk from mutual inductance, which could previously be seen in Figure 5, has been filtered out.

Whilst the example is described above with reference to mitigating cross-talk interference between only two sensors, the principles of the present disclosure can equally apply to arrays of more than two sensors located in close proximity with one another. Where there are more than two sensors, the cut-off frequency of the low-pass filter 1510 may be designed such that it attenuates frequencies which are greater than or equal to the smallest difference in frequency between the frequencies of any two driving supplies - e.g. the filter may be designed such that $f_{cut-off} \leq \frac{1}{10} min \left( \frac{|\omega_m - \omega_n|}{2\pi} \right)$ where $\omega_m$ and $\omega_n$ are driving frequencies used in the sensor array for different respective sensors $m$ and $n$, and the cut-off frequency $f_{cut-off}$ is chosen to be a factor of ten lower than the expected minimum cross-talk frequency. By cutting-off from the smallest expected difference in frequency, all larger differences in frequencies will also be filtered out.

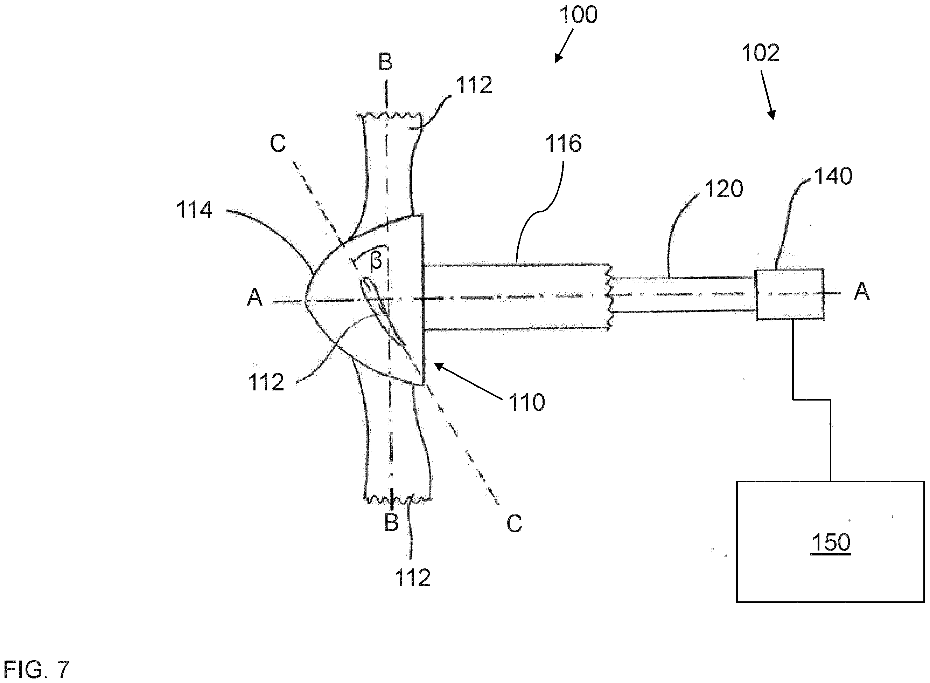

One exemplary use case for the eddy-current proximity sensor system set out above, amongst other possible use cases, is described below in detail with reference to Figures 7 to 11, in which two or more eddy-current sensors are used in an aircraft control system to measure the distance to a surface of a component indicative of propeller blade angle. In this feedback system, having at least two eddy-current sensors can increase the accuracy and/or reliability of the sensing system. By sensing proximity of the surface in two different places, two different values can be calculated for the blade angle of the aircraft propeller, and a mean value taken from these two measurements. As well as increasing accuracy of the system by calculating a mean value, having at least two different eddy-current sensors may also add redundancy to the system, and thus improve its safety and reliability. Due to designed redundancy requirements, each of the eddy-current sensors may be required to be driven by a different power supply. Due to the limitations on the accuracy of the components used for the sensor system, even if the frequency of the input supply is designed to be the same for each of the eddy-current sensors, there is likely to be some difference between the frequencies in reality. Therefore, cross-talk interference between the sensors is expected to occur, and examples of the present disclosure are suitable for addressing this problem of cross-talk interference.

Figure 7 is a schematic diagram of a propeller assembly 100 and a blade angle sensing system 102. Shown in Figure 7 is a variable-pitch propeller 110 comprising a plurality of propeller blades 112 mounted to a propeller hub 114. A torque transmitted by the propeller shaft 116 is configured to rotate the propeller 110 about the axis labelled A, the propeller shaft 116 being coupled to an engine (not shown). The engine could be a thermal engine or an electric motor. An elongate fluid transfer tube 120 is mechanically coupled to the propeller 110 for altering the pitch (beta) angle of the blades 112.

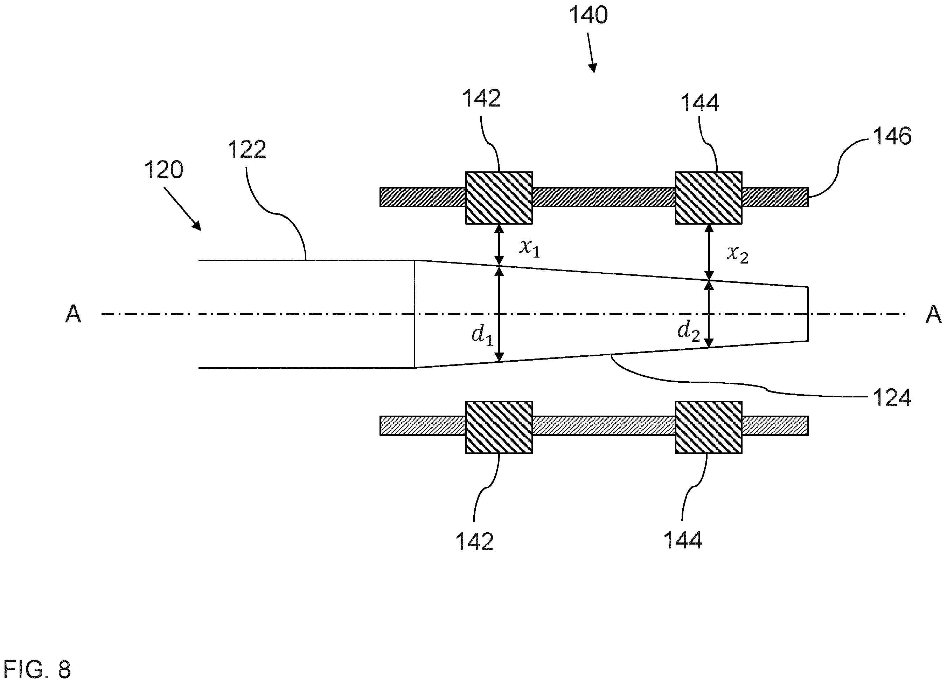

The blade angle sensing system 102 comprises a sensor apparatus 140 that is rigidly mounted in proximity to a moveable target portion 124 (as visible in Figure 8) of the transfer tube 120. The sensor apparatus 140 is communicatively coupled to a processing unit 150, which may be part of the sensing system 102, or which may be distinct from the sensing system 102 (e.g. being part of a more complex vehicle control system).

Each of the propeller blades 112 is rotatable through a range of adjustable blade pitch (beta) angles (marked β in Figure 7) being the angle between the chord line (see label C in Figure 7) of the propeller blade section, and a plane perpendicular to the axis of propeller (see label B in Figure 7). The fluid transfer tube 120, which is filled with a hydraulic fluid such as oil, is coupled to an actuator within the rotating hub 114 of the propeller 110 in such a way that the transfer tube 120 rotates coaxially with the propeller 110, and translates axially with varying pitch angle of the blades 112 of the propeller 110. Thus, the axial translation of the transfer tube 120 may be used to determine the blade pitch angle. The sensor apparatus 140 is configured to sense (i.e. measure qualitatively or quantitively) this axial displacement, and the processing unit 150 receives and uses the information from the sensor apparatus 140 to provide feedback to an operator and/or to control the engine or propeller. The processing unit 150 may, in some examples, determine the blade pitch angle of the plurality of propeller blades 112 as a quantifiable value (e.g. in degrees). Whilst in Figure 7, the transfer tube 120 is located coaxially within the hollow propeller shaft 116, this need not be the case in all examples.

The arrangement of the sensor apparatus 140 relative to the transfer tube 120 is shown in more detail in Figure 8. Other components of a conventional propeller and propulsion system are considered to be well-known to a person skilled in the art and not pertinent to the disclosure herein. They are thus are emitted from Figure 7 for simplicity.

Figure 8 is a schematic diagram showing a cross-sectional view of the arrangement of the sensor apparatus 140 relative to a portion 124 of the transfer tube 120, when the transfer tube is in a first displacement position along the rotational axis A.

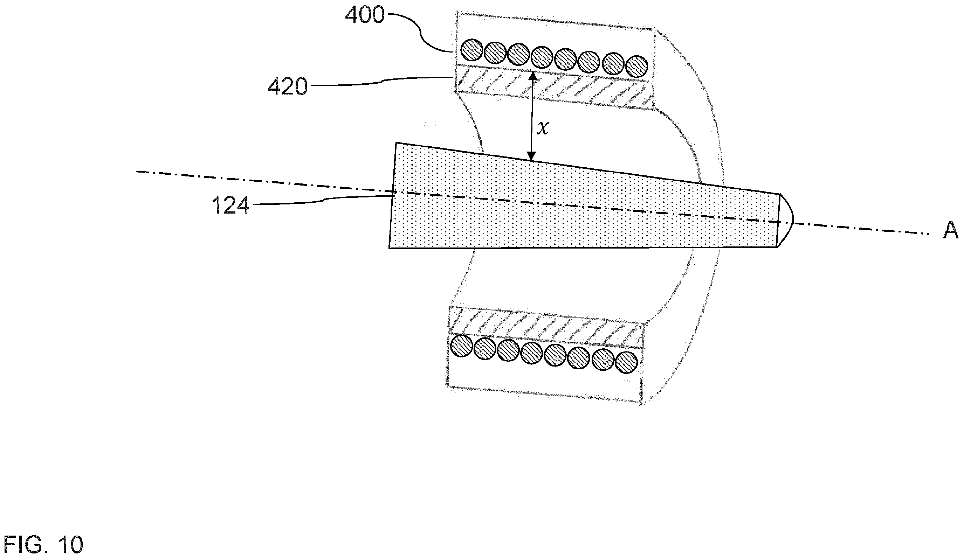

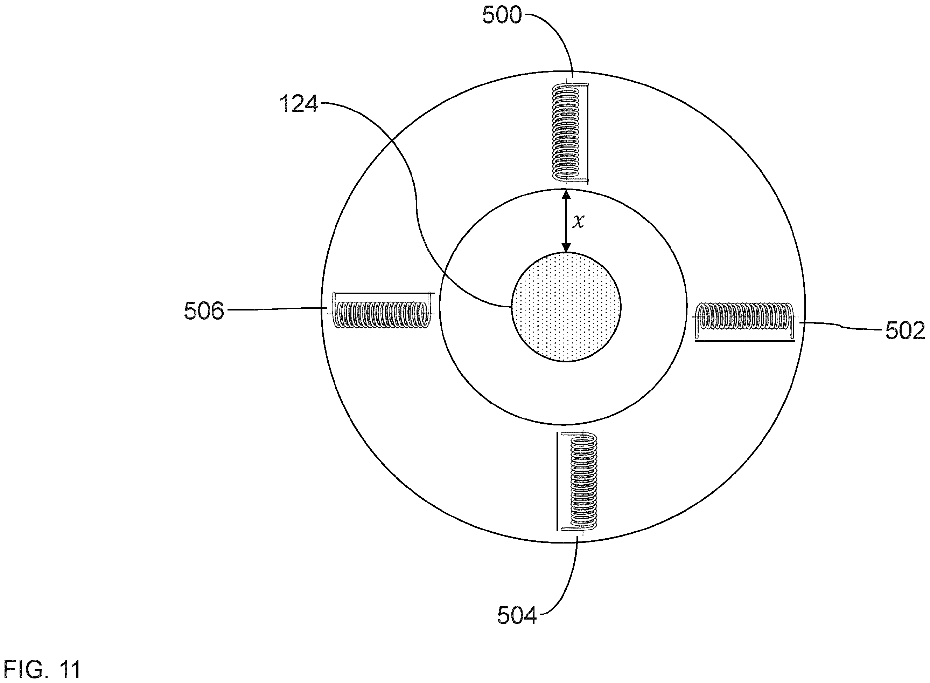

The transfer tube 120 comprises a main tubular portion 122, supported by a bearing (out of view beyond the left edge of Figure 8), and a target portion 124 mounted to, or integral with, an end of the transfer tube 120. The sensor apparatus 140 comprises a support member (e.g. a frame or housing) 146, a first distance sensor 142 and a second distance sensor 144. Each distance sensor 142, 144 is rigidly held by the support member 146, which is statically mounted to a housing of the propeller assembly 100 or engine, such that the target portion 124 can rotate and move axially relative to the sensor apparatus 140. In the arrangement shown in Figure 8 each distance sensor 142, 144 is cylindrical ring-shaped and mounted coaxially around the target portion 124 of the transfer tube 120. In some examples, each distance sensor 142, 144 comprise one or more coils of wire, each having one or more turns. These may be spaced around the circumference of the ring-shaped sensor, facing towards the target portion 124 (e.g. as described with reference to Figure 11 below), or may wrap around the target portion 124 (e.g. as described with reference to Figure 10 below). The coils are electrically coupled to driving and sensing circuitry within the sensor apparatus 140, which outputs analogue or digital signals to the processing system 150. Each distance sensor may have its own drive circuitry (e.g. an oscillator) and sensing circuitry. This may provide robustness in case part of the sensing system 102 fails.

The target portion 124 not only rotates with the propeller 110, but is configured to translate axially with varying pitch angle of the blades 112 of the propeller blades 112. Due to the static mounting of the sensor apparatus 140, this causes the target portion 124 to move relative to the sensors 142, 144, . As can be seen in Figure 8, the target portion 124 comprises an outer surface that is a surface of revolution about the axis of rotation labelled A, and that has a diameter $d$ which decreases monotonically with increasing distance along the axis of rotation A away from the propeller hub 114.

At a first exemplary position along the axis of rotation A the target portion 124 has a diameter $d_1$, and at a second exemplary position along the axis of rotation A the target 124 has a diameter $d_2$ which is smaller than $d_1$. Whilst the slope of the surface of the target portion 124 shown in Figure 8 is linear (i.e. frustoconical in shape), other examples may use other profiles where the diameter still changes monotonically with distance along the axis of rotation A (e.g. shaped like a trumpet bell) . Each distance sensor 142, 144 can be used to sense a respective distance between the distance sensor 142, 144 and the outer surface of the target portion 124 adjacent the sensor 142, 144. Due to the shape of the target portion 124, for each of the distance sensors 142, 144, the distance between the distance sensor and the outer surface of the target portion 124 will also vary monotonically with axial displacement of the target portion 124 along the axis of rotation A. As can be seen in Figure 8, at the first position along the axis of rotation A the distance $x_1$ between the target portion 124 and the first distance sensor 142 varies inversely with diameter $d_1$, and the distance $x_2$ between the target portion 124 and the second distance sensor 144 varies inversely with the diameter $d_2$. This will be the case regardless of whether the target portion 124 is rotating or not. This allow the sensing system 102 to advantageously sense the blade angle even when the propeller is not turning.

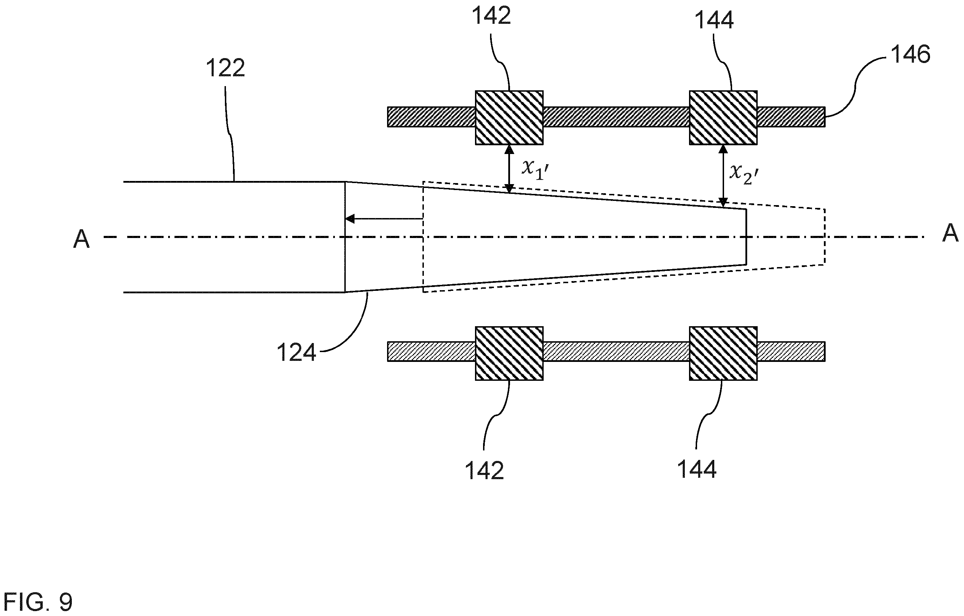

Figure 9 is a schematic diagram showing the transfer tube 120 in a second displacement position along the rotational axis A. The dashed outline shown in Figure 9 corresponds to the first displacement position of the target portion 124 as depicted in Figure 8. As can be seen in Figure 9, in the second displacement position of the transfer tube 120, the distance $x_{1'}$ from the first distance sensor 142 to the outer surface of the target portion 124 is greater than the distance $x_1$ from the first distance sensor 142 to the outer surface of the target portion 124, which was measured in the first displacement position of the transfer tube 120. The same applies for the second distance sensor 144 - i.e. the distance $x_{2'}$ from the second distance sensor 144 to the outer surface of the target portion 124 in the second displacement position of the transfer tube 120 is greater than the distance $x_2$ from the first distance sensor 142 to the outer surface of the target portion 124 which was measured in the first displacement position of the transfer tube 120.

Thus it can be seen that, as the transfer tube 120 moves along the rotational axis A, the first distance sensor 142 will measure a varying distance x to the outer surface of the target portion 124, and, due to the monotonicity of this relationship, for a given axial displacement of the transfer tube 120, the distance between the first distance sensor 142 and the outer surface of the target portion 124 represents a unique pitch angle of the blades 112 of the propeller 110. The same applies to the measurements made by the second distance sensor 144.

In the example shown in Figures 8 and 9, the sensor apparatus 140 has two similar distance sensors 142, 144, arranged side by side. However, in some examples the blade angle feedback system 102 has only a single ring-shaped distance sensor - e.g. corresponding to the first sensor 142 only - and the pitch angle of the propeller blades 112 can be determined from the measurements output by this one distance sensor only. Other examples may have three or more sensors. Using two or more distance sensors to measure the distance to the surface of the target portion 124 allows two or more independent signals indicative of the distance to the target portion to be generated for improved accuracy and/or reliability (e.g. in case one sensor fails).

The sensor apparatus 140 outputs one or more signals in dependence on the sensed distances $x_1$, $x_2$ to the processing system 150 shown in Figure 1, and the processing system 150 may determine a calibrated pitch angle of the propeller blades 112 by processing the received signals. The processing system 150 may be configured to use a predetermined mathematical relationship between the output of the sensor apparatus 140 and the pitch angle of the propeller blades 112 to determine the pitch angle of the propeller blades 112. For example, each measured distance may be converted to a pitch angle using a look-up table stored in memory, or may be used to evaluate a mathematical equation. In order to improve the accuracy of the sensor system, a calibration may be performed in some examples for calibrating the end points of the range of axial displacement over which the transfer tube can move - i.e. the propeller pitch angle may be determined at each limit position of the transfer tube, fore and aft along the axis of rotation. These calibration points may be used to adjust values in the look-up table, or may be used when evaluating an equation.

Each signal indicative of the distance to the target portion from each sensor 142, 144 may be independent of the other, and may be used individually to determine a respective value for the pitch angle of the propeller blades 112. However, when both sensors 142, 144 are working, the propeller blade angle sensing system 102 may average the signals from each (e.g. a mean). Calculating an average value may improve the accuracy and stability of the propeller blade angle sensing system (e.g. in the presence of noise affecting one of the sensors). Furthermore, having at least two different sensors in the propeller blade angle sensing system can add redundancy to the system, and thus improve its safety and reliability.

Whilst in some examples the output signals from each of the distance sensors 142, 144 may be combined together by the processing system 150 in order to determine the pitch angle of the propeller blades 112, it should be appreciated that, due to redundancy afforded by the system, the sensor apparatus 140 and the processing system 150 may be configured such that if one of the distance sensors 142, 144 were to fail, a pitch angle of the propeller blades can still be determined in dependence on the output signal from whichever distance sensor is still operational.

In this or other examples, each distance sensor may be constructed in any suitable way for qualitatively or quantitively sensing a distance from the distance sensor to the outer surface of the target portion proximate the sensor. Each sensor may comprise a single sensor element, or a plurality of sensor elements, e.g. uniformly spaced in a ring. The elements in some examples described herein are coils, but other example systems may use one or more sensor elements that are inductive sensor elements, or capacitive sensor elements, or Hall effect sensor elements, or optical sensor elements, or ultrasonic sensor elements, or any combination of such elements.

In examples where the distance sensor comprises an inductive sensor element, at least the outer surface of the target portion may be required to be conductive. In examples using a Hall-effect sensor element, at least part of the outer surface of the target portion may be magnetic. In examples using an optical sensor, the outer surface of the target portion may be reflective. Similar design considerations for the target portion may be taken with regard to the use of other types of distance sensors.

Figure 10 shows an exemplary construction of a ring-shaped inductive distance sensor that could be used as one or each of the sensors 142, 144 shown in Figure 8. In this example, the distance sensor comprises a coil of wire 400 which is wrapped around the circumference of a ring-shaped support structure 420. The support structure is manufactured from a non-magnetic material such as a plastic, e.g. polyvinyl chloride (PVC). The coil 400 may have a single turn of wire around the circumference of the ring, but in some examples, e.g. as shown in Figure 10, the coil 400 comprises a plurality of turns of wire. The strength of the magnetic field created by the coil when driven by an alternating supply may be increased by increasing the number of turns. This may allow the coil 400 of the distance sensor 142, 144 to be more sensitive to changes in distance to the surface of the target portion 124.

As an alternative to the sensor shown in Figure 10, the schematic diagram of Figure 11 shows an example of an alternative ring-shaped inductive distance sensor. This alternative arrangement could also be used as one or both of the sensors 142, 144 shown in Figure 8. The ring-shaped sensor shown in Figure 11 comprises four coils of wire 500, 502, 504 and 506 spaced uniformly around the circumference of the ring-shaped sensor, with each coil axis arranged radially to the rotational axis of the target portion 124. Although four coils are shown in Figure 11, more or less than four coils may be used in other examples. In some examples, each coil may have a ferromagnetic core. The ferromagnetic core doesn't increase the strength of the magnetic field produced by the coil but permits to focus it on the target and act as shield to reduce magnetic pollution caused by the sensor. Using a ferromagnetic core may improve the focus of its sensing capability. Having a plurality of coils 500, 502, 504 and 506 spaced around the circumference of the distance sensors 142, 144 can provide a plurality of measurements of the distance to the surface of the target portion 124-one from each sensor element-for a given axial position of the sensor. In such a system, an average value - e.g. the mean value - of the measured distances from each coil in the distance sensor may be calculated, and the pitch angle of the propeller may be determined using an average measured distance. This may improve the accuracy of the distance sensing.

In examples described above where two or more inductive sensor elements are used (e.g. in two different distance sensors, or within the same ring-shaped distance sensor), these may be mounted close to one another. Where multiple electromagnetic sensor elements are mounted in close proximity to one another, mutual inductance between the respective sensor elements (e.g. their respective coils) can cause interference, especially where the two sensor elements do not share the same excitation signal. Where the electromagnetic sensors are driven using alternating supplies with different frequencies to one another, the interference from mutual induction varies with time in the output signals of the sensors, meaning the output of the sensors is difficult to calibrate to account for the interference. The interference in the output signals from each of the distance sensors can be mitigated as described in more detail below.

The proximity of the surface of the transfer tube to an eddy-current sensor conveys information regarding the blade angle of the aircraft propeller, and using eddy-current sensors allows the proximity of the surface of the transfer tube to be measured without the sensing system having to make physical contact with the transfer tube. This contactless sensing is suitable for this purpose given that the transfer tube may be rotating about and/or translating along its longitudinal axis in use.

It will be appreciated by those skilled in the art that the disclosure has been illustrated by describing one or more specific examples thereof, but is not limited to these examples; many variations and modifications are possible, within the scope of the accompanying claims.

**Claims**

1. An electromagnetic sensor system for sensing distance to a conductive target, the sensor system comprising:

   a first sensor comprising:

   a first electromagnetic sensor coil;
   first drive circuitry for driving the first electromagnetic sensor coil with a first alternating current at a first predetermined frequency; and
   first sensing circuitry, electrically coupled to the first electromagnetic sensor coil, and configured to output a first signal having a component that is indicative of a distance from the first electromagnetic sensor coil to the conductive target;

   a second sensor comprising:

   a second electromagnetic sensor coil; and
   second drive circuitry for driving the second electromagnetic sensor coil with a second alternating current at a second predetermined frequency,
   wherein the second predetermined frequency is offset from the first predetermined frequency by an offset amount, and

   filtering circuitry configured to apply a low-pass filter to the first signal, wherein the low-pass filter has a cut-off frequency that is below the offset amount such that a component of the first signal caused by mutual inductance between the first and second electromagnetic sensor coils is attenuated, and to output a first filtered signal indicative of the distance from the first electromagnetic sensor coil to the conductive target.

2. The electromagnetic sensor system of claim 1, wherein the component of the first signal indicative of distance is a low-frequency or DC component having a maximum frequency that is less than the offset amount.

3. The electromagnetic sensor system of any claim 1 or 2, wherein the first sensor comprises a Wheatstone bridge, the first electromagnetic sensor coil forming at least part of one branch of the Wheatstone bridge, and a further branch of the Wheatstone bridge comprising a reference coil, wherein the Wheatstone bridge is configured to produce a differential signal representative of an impedance of the first electromagnetic sensor coil.

4. The electromagnetic sensor system of claim 3, wherein the first sensor comprises first conditioning circuitry configured to receive the differential signal from the Wheatstone bridge and to output a single-ended output signal.

5. The electromagnetic sensor system of any preceding claim, wherein at least the first electromagnetic sensor coil comprises a ferromagnetic core.

6. The electromagnetic sensor system of any preceding claim, wherein the offset amount is equal to or greater than 1kHz.

7. The electromagnetic sensor system of any preceding claim, wherein the low-pass filter is configured to attenuate the component of the first signal caused by mutual inductance by at least 3dB.

8. The electromagnetic sensor system of any preceding claim, wherein the cut-off frequency of the low-pass filter is one-tenth of the offset amount or lower.

9. The electromagnetic sensor system of any preceding claim, wherein the low-pass filter comprises analog filtering circuitry.

10. The electromagnetic sensor system of any preceding claim, further comprising:

    a memory storing a predetermined relationship between the output of the first sensor and the distance between the conductive target and the first sensor; and
    a processing system configured to use the predetermined relationship stored in the memory to calculate a calibrated distance between the conductive target and the first electromagnetic sensor coil.

11. The electromagnetic sensor system of any preceding claim, wherein the second sensor comprises second sensing circuitry, electrically coupled to the second electromagnetic sensor coil, and configured to output a second signal having a component that is indicative of a distance from the second electromagnetic sensor coil to the conductive target or to a further conductive target, and wherein the filtering circuitry is further configured to apply a low-pass filter to the second signal, wherein the low-pass filter has a cut-off frequency that is below the offset amount such that a component of the second signal caused by mutual inductance between the first and second electromagnetic sensor coils is attenuated, and to output a second filtered signal indicative of the distance from the second electromagnetic sensor coil to the conductive target or to the further conductive target.

12. The electromagnetic sensor system of claim 11, further comprising the conductive target, and wherein each of the first sensor and the second sensor is configured to sense a respective distance to the conductive target.

13. The electromagnetic sensor system of any preceding claim, wherein the electromagnetic sensor system comprises three or more sensors, including the first and second sensors, each sensor comprising:

a respective electromagnetic sensor coil; and drive circuitry for driving the electromagnetic sensor coil at a respective predetermined frequency;

wherein the filtering circuitry is configured to apply a low-pass filter to a respective signal output by at least one of the plurality of sensors, wherein the low-pass filter has a cut-off frequency that is below a minimum offset amount such that a mutual-inductance component of the signal caused by mutual inductance between any of the electromagnetic sensor coils is attenuated.

14. The electromagnetic sensor system of claim 13, wherein the minimum offset amount corresponds to the smallest offset amount between any two of the predetermined frequencies at which the respective electromagnetic sensor coils in the electromagnetic sensor system are driven.

15. A method for sensing distance to a conductive target using an electromagnetic sensor system, the sensor system comprising:

a first sensor comprising a first electromagnetic sensor coil; and a second sensor comprising a second electromagnetic sensor coil,

the method comprising:

driving the first electromagnetic sensor coil with a first alternating current at a first predetermined frequency; driving the second electromagnetic sensor coil with a second alternating current at a second predetermined frequency, wherein the second predetermined frequency is offset from the first predetermined frequency by an offset amount; outputting a first signal having a component that is that is indicative of a distance from the first electromagnetic sensor coil to the conductive target;

applying a low-pass filter to the first signal, wherein the low-pass filter has a cut-off frequency that is below the offset amount such that a component of the first signal caused by mutual inductance between the first and second electromagnetic sensor coils is attenuated; and outputting a first filtered signal indicative of the distance from the first electromagnetic sensor coil to the conductive target.

FIG. 1

$V_{OUT\_1}$

1252

1240

1120

$V_{sense\_A}$

$V_{sense\_B}$

1212

1214

1216

1230

1220

1210

1200

Target

$R_s$

$R_s$

$R + \Delta R$

$L \pm \Delta L$

Sensor coil

$R_s$

Ref. coil

$e(t)$

Excitation Voltage

FIG. 2

FIG. 3

FIG. 4

EP 4 628 834 A1

FIG. 5

FIG. 6

FIG. 7

EP 4 628 834 A1

FIG. 8

FIG. 9

EP 4 628 834 A1

FIG. 10

EP 4 628 834 A1

FIG. 11

Europäisches
Patentamt

European
Patent Office

Office européen
des brevets

# EUROPEAN SEARCH REPORT

**Application Number**

EP 24 30 5525

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WANG KUN ET AL: "Analysis and Experiment of Self-Differential Eddy-Current Sensor for High-Speed Magnetic Suspension Electric Machine", IEEE TRANSACTIONS ON INDUSTRY APPLICATIONS, IEEE SERVICE CENTER, PISCATAWAY, NJ, US, vol. 55, no. 3, 1 May 2019 (2019-05-01), pages 2538-2547, XP011720612, ISSN: 0093-9994, DOI: 10.1109/TIA.2018.2890032 [retrieved on 2019-04-19] | 1,2, 5-12,15 | INV. G01B7/02 G01B7/06 |
| Y | * chapter II., V.; abstract; figures 1a,2,6 * | 3,4 | |
| X | GB 2 079 948 A (EXPLORATION LOGGING INC) 27 January 1982 (1982-01-27) | 1,5-10, 12-15 | |
| Y | * page 4, line 35 - line 40; figures 15,17 * <br> * page 5, line 37 - line 41 * | 3,4 | |
| X | CN 102 589 407 A (HARBIN HIGHTECH PREC GAGE CO LTD) 18 July 2012 (2012-07-18) * table 1; paragraphs [0002], [0040], [0056], [0065] * | 1-15 | **TECHNICAL FIELDS SEARCHED (IPC)** <br> G01B |
| Y | US 2002/149360 A1 (LE CUONG DUY [US]) 17 October 2002 (2002-10-17) * paragraphs [0019], [0020]; figure 1 * | 3,4 | |

The present search report has been drawn up for all claims

| Place of search | Date of completion of the search | Examiner |
|---|---|---|
| Munich | 9 September 2024 | Biedermann, Benjamin |

EPO FORM 1503 03.82 (P04C01)

**ANNEX TO THE EUROPEAN SEARCH REPORT**
**ON EUROPEAN PATENT APPLICATION NO.**                    EP 24 30 5525

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2024

| Patent document cited in search report | | Publication date | Patent family member(s) | | Publication date |
|---|---|---|---|---|---|
| GB 2079948 | A | 27-01-1982 | AU | 522028 B2 | 13-05-1982 |
| | | | GB | 2079948 A | 27-01-1982 |
| | | | US | 4338565 A | 06-07-1982 |
| CN 102589407 | A | 18-07-2012 | NONE | | |
| US 2002149360 | A1 | 17-10-2002 | NONE | | |

EPO FORM P0459

For more details about this annex : see Official Journal of the European Patent Office, No. 12/82